# EUROPEAN PATENT SPECIFICATION

(11) **EP 3 611 622 B1**
(45) Date of publication and mention of the grant of the patent: **21.07.2021**
(21) Application number: 19183079.3
(22) Date of filing: 27.06.2019
(51) Int. Cl.: G06F 11/30, H04L 12/741, G06F 11/34, G06N 5/04, H04L 12/24, H04L 12/26, H04L 12/713, H04L 12/851, H04L 12/931, H04L 29/08, H04L 29/06

(54) **TECHNOLOGIES FOR CLASSIFYING NETWORK FLOWS USING ADAPTIVE VIRTUAL ROUTING**
TECHNOLOGIEN ZUR KLASSIFIZIERUNG VON NETZSTRÖMEN MITTELS ADAPTIVEM VIRTUELLEM ROUTING
TECHNOLOGIES DE CLASSIFICATION DE FLUX DE RÉSEAU À L'AIDE DU ROUTAGE VIRTUEL ADAPTATIF

(30) Priority: 17.08.2018 US 201815999133
(43) Date of publication of application: 19.02.2020
(73) Proprietor: INTEL Corporation, Santa Clara, CA 95054 (US)
(72) Inventor: WANG, Yipeng, Portland, Oregon 97229 (US); WANG, Ren, Portland, Oregon 97229 (US); TSENG, Janet, Portland, Oregon 97229 (US); TSAI, Jr-Shian, Portland, Oregon 97229 (US); TAI, Tsung-Yuan, Portland, Oregon 97229 (US)
(74) Representative: 2SPL Patentanwälte PartG mbB

(56) References cited:
- US-A1- 2017 180 253
- US-A1- 2017 372 222
- YAXUAN QI ET AL: "Towards high-performance flow-level packet processing on multi-core network processors", PROCEEDINGS OF THE 3RD ACM/IEEE SYMPOSIUM ON ARCHITECTURE FOR NETWORKING AND COMMUNICATIONS SYSTEMS, ANCS?07, DECEMBER 3?4, 2007, ORLANDO, FLORIDA, USA, XX, ORLANDO, FLORIDA, USA, 3 December 2007 (2007-12-03), pages 17-26, XP058211942, DOI: 10.1145/1323548.1323552 ISBN: 978-1-59593-945-6

## Description

### BACKGROUND

Modern computing devices have become ubiquitous tools for personal, business, and social uses. As such, many modern computing devices are capable of connecting to various data networks, including the Internet, to transmit and receive data communications over the various data networks at varying rates of speed. To facilitate communications between computing devices, the data networks typically include one or more network computing devices (e.g., compute servers, storage servers, etc.) to route communications (e.g., via switches, routers, etc.) that enter/exit a network (e.g., north-south network traffic) and between network computing devices in the network (e.g., east-west network traffic). Such data networks typically have included complex, large-scale computing environments, such as high-performance computing (HPC) and cloud computing environments. Accordingly, it should be understood that network traffic has to be transmitted between and processed by computing devices with minimal latency. Depending on the specific purpose of each received network packet, the receiving computing device processes the data in a certain way. To identify how to process the data, the network packets are categorized or otherwise classified according to "flows," which define operations and/or other rules for the processing of the network packets. As speed is a critical feature in computing systems, a variety of mechanisms have been employed to increase the speed at which such packet flow classifications occur.

Once such classification mechanism is the use of hash tables. Hash tables are often used to improve the speed of data lookup operations when it is necessary to sift through large amounts of data to identify a match. In particular, hash tables (e.g. associative arrays) utilize hash functions to deterministically map data of variable length to data of fixed size (i.e., the signature). Alternative classification mechanisms have been developed as well, including various algorithms and implementations for flow classification proposed by either industry or the research community to improve performance, such as tuple space search based algorithms, tree-based search algorithms, highly optimized decision tree based algorithms, combinations of tree and hash lookup tables, etc. However, present flow classification solutions are generally not optimal for all use cases. For example, some solutions improve lookup performance but penalize update speed, while some hash table based models, in general, provide efficient lookup and update, but are not typically considered to be memory "friendly". US2017/372222 A1 discloses a method for training a classification algorithm executed by a compute device. The compute device selects a classification algorithm from a plurality of classification algorithms to use to classify training data samples into child nodes. The compute device trains the selected classification algorithm. After training the selected classification algorithm, the compute device determines a performance of the classification algorithm based on test data. The compute device determines if the performance of the selected classification algorithm is acceptable based on several possible metrics, such as a value of the F-measure or other metric, the improvement from previous iteration, the number of iterations, the generalization error, etc. US2017/180253 A1 discloses a network processor that classifies packets. The network processor's architecture includes a classification algorithm level which implements multiple different classification algorithm engines, wherein the individual algorithm applied to a received packet by a corresponding classification algorithm engine can be selected based on a field of the packet, a port at which the packet was received or other criteria. Document by YAXUAN QI ET AL: "Towards high-performance flow-level packet processing on multi-core network processors",PROCEEDINGS OF THE 3RD ACM/IEEE SYMPOSIUM ON ARCHITECTURE FOR NETWORKING AND COMMUNICATIONS SYSTEMS, ANCS?07, DECEMBER 3?4, 2007, ORLANDO, FLORIDA, USA, XX, ORLANDO, FLORIDA, USA, 3 December 2007 (2007-12-03), pages 17-26, XP058211942, DOI: 10.1145/1323548.1323552ViewerXP ISBN: 978-1-59593-945-6 discloses a flow classification algorithm that is run on a multi-core network processors.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for classifying network flows using adaptive virtual routing that includes a source compute device communicatively coupled to a network appliance;
FIG. 2 is a simplified block diagram of at least one embodiment of an environment of the network appliance of the system of FIG. 1;
FIGS. 3A and 3B are a simplified block diagram of at least one embodiment of a method for classifying network flows using adaptive virtual routing that may be executed by the network appliance of FIGS. 1 and 2; and
FIG. 4 is a simplified block diagram of at least one embodiment of a method for performing offline profiling that may be executed by the network appliance of FIGS. 1 and 2.

### DETAILED DESCRIPTION OF THE DRAWINGS

The present invention is defined by the independent claims. Further embodiments are set forth in the dependent claims.

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C): (A and B); (A and C); (B and C); or (A, B, and C). Similarly, items listed in the form of "at least one of A, B, or C" can mean (A); (B); (C): (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

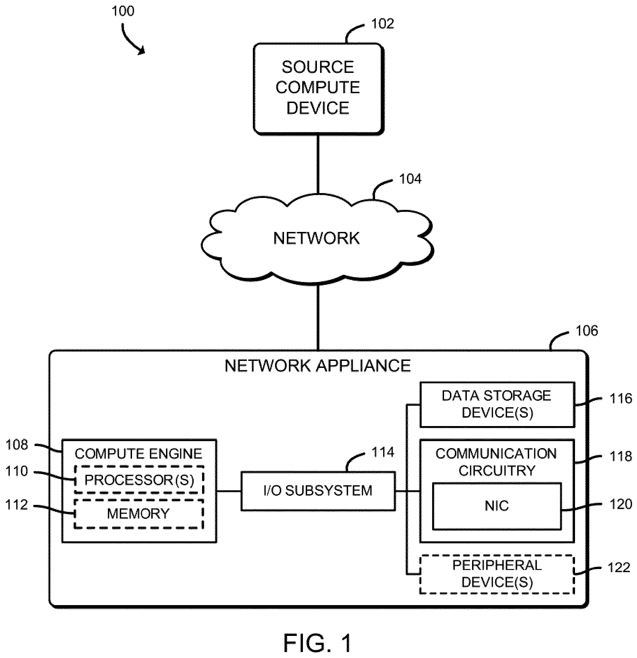

Referring now to FIG. 1, in an illustrative embodiment, a system 100 for classifying network flows using adaptive virtual routing includes a source compute device 102 communicatively coupled to a network appliance 106 via a network 104. It should be appreciated that while only a single network appliance 106 is shown, the system 100 may include multiple network appliances 106, in other embodiments. It should be further appreciated that the source compute device 102 and the network appliance 106 may reside in the same data center or high-performance computing (HPC) environment. Additionally or alternatively, the source compute device 102 and network appliance 106 may reside in the same network 104 connected via one or more wired and/or wireless interconnects.

The network appliance 106 is configured to receive network packets (e.g., Ethernet frames, messages, etc.), such as may be received from the source compute devices 102 via the network 104, perform some level of processing (e.g., one or more processing operations) on at least a portion of the data associated with the received network packets, and either drop or transmit each received network packet to a destination (e.g., to another network appliance in the same or alternative network, based to the source compute device 102, etc.). To perform the processing operations, the network appliance 106 may be configured to leverage virtualization technologies to provide one or more virtualized network functions (VNFs) (e.g., executing on one or more virtual machines (VMs), in one or more containers, etc.) to execute network services on commodity hardware. Such network services may include any type of network service, including firewall services, network address translation (NAT) services, domain name system (DNS) services, load-balancing services, deep packet inspection (DPI) services, transmission control protocol (TCP) optimization services, cache management services, Internet Protocol (IP) address management services, etc.

In network function virtualization (NFV) architecture, a VNF is configured to handle specific network functions that run in one or more VMs on top of hardware networking infrastructure traditionally carried out by proprietary, dedicated hardware, such as routers, switches, servers, cloud computing systems, etc. In other words, each VNF may be embodied as one or more VMs configured to execute corresponding software or instructions to perform a virtualized task. It should be understood that a VM is a software program or operating system that not only exhibits the behavior of a separate computer, but is also capable of performing tasks such as running applications and programs like a separate computer. A VM, commonly referred to as a "guest," is typically configured to run a dedicated operating system on shared physical hardware resources of the device on which the VM has been deployed, commonly referred to as a "host." It should be appreciated that multiple VMs can exist within a single host at a given time and that multiple VNFs may be executing on the network appliance 106 at a time (e.g., in parallel).

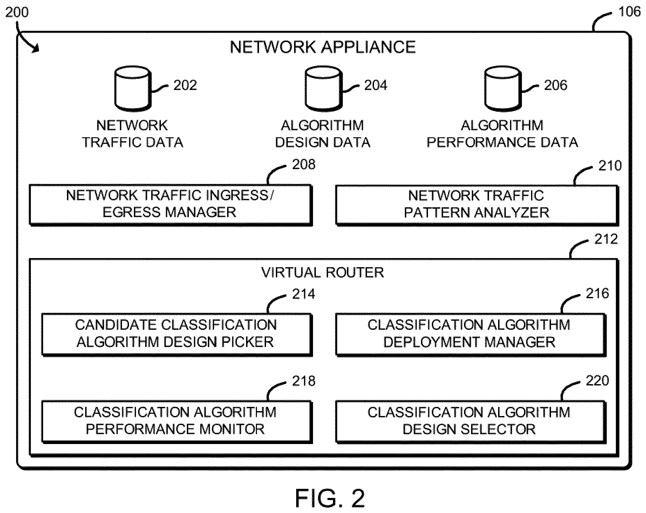

In use, as will be described in further detail below, the network appliance 106 is configured to identify a flow associated with each received network packet. To identify the flow for each received network packet, the network appliance 106, or more particularly a virtual router (see, e.g., the virtual router 212 of FIG. 2) of the network appliance 106, is configured to run a flow classification algorithm to identify a flow associated with the received network packet. It should be appreciated that there are many different flow classification algorithm designs (i.e., a classification algorithm with a specific configuration). However, identifying an optimal flow classification algorithm design during the design stage of a virtual router, without knowing the run-time usages, which can vary widely depending on application (e.g., deployed in a data center versus in a telecommunications network) and change over time (e.g., a high-traffic period versus a low-traffic period).

Furthermore, present virtual router technologies are typically designed with a fixed algorithm that is configured to perform the "best" on average (e.g., for a targeted usage at the time of virtual router design). However, unlike those fixed algorithm virtual router technologies, the virtual router as described herein is configured to adapt to both traffic patterns and rule patterns, as well as other requirements, during run-time. In other words, the virtual router as disclosed herein is configured to function as an adaptive virtual router that can dynamically choose the optimal flow classification algorithm design internally to optimize the throughput for run time usages (e.g., traffic patterns, rule patterns, etc.). To do so, the virtual router includes a suite of flow classification algorithm designs that provide optimal performance for different usages and is configured to apply an approach to adaptively choose the appropriate classification algorithm design to optimize performance. Accordingly, the virtual router is configured to select the appropriate flow classification algorithm design internally, without requiring manual interference.

The network appliance 106 may be embodied as any type of computation or computing device capable of performing the functions described herein, including, without limitation, a server (e.g., stand-alone, rack-mounted, blade, etc.), a switch (e.g., a disaggregated switch, a rack-mounted switch, a standalone switch, a fully managed switch, a partially managed switch, a full-duplex switch, and/or a half-duplex communication mode enabled switch), a sled (e.g., a compute sled, a storage sled, an accelerator sled, a memory sled, etc.) a router, a web appliance, a processor-based system, and/or a multiprocessor system. In some embodiments, the network appliance 106 may be embodied as a distributed computing system, a composable computing system (e.g., composable by an orchestrator), or some other type of computing system in which resources can be pooled. In such embodiments, the network appliance 106 may be embodied as more than one computing device in which each computing device is configured to pool resources and perform at least a portion of the functions described herein.

As shown in FIG. 1, the illustrative network appliance 106 includes a compute engine 108, an I/O subsystem 114, one or more data storage devices 116, communication circuitry 118, and, in some embodiments, one or more peripheral devices 122. It should be appreciated that the network appliance 106 may include other or additional components, such as those commonly found in a typical computing device (e.g., various input/output devices and/or other components), in other embodiments. Additionally, in some embodiments, one or more of the illustrative components may be incorporated in, or otherwise form a portion of, another component.

The compute engine 108 may be embodied as any type of device or collection of devices capable of performing the various compute functions as described herein. In some embodiments, the compute engine 108 may be embodied as a single device such as an integrated circuit, an embedded system, a field-programmable-array (FPGA), a system-on-a-chip (SOC), an application specific integrated circuit (ASIC), reconfigurable hardware or hardware circuitry, or other specialized hardware to facilitate performance of the functions described herein. Additionally, in some embodiments, the compute engine 108 may include, or may otherwise be embodied as, one or more processors 110 (i.e., one or more central processing units (CPUs)) and memory 112.

The processor(s) 110 may be embodied as any type of processor(s) capable of performing the functions described herein. For example, the processor(s) 110 may be embodied as one or more single-core processors, multi-core processors, digital signal processors (DSPs), microcontrollers, or other processor(s) or processing/controlling circuit(s). In some embodiments, the processor(s) 110 may be embodied as, include, or otherwise be coupled to an FPGA (e.g., reconfigurable circuitry), an ASIC, reconfigurable hardware or hardware circuitry, or other specialized hardware to facilitate performance of the functions described herein.

The memory 112 may be embodied as any type of volatile or non-volatile memory or data storage capable of performing the functions described herein. It should be appreciated that the memory 112 may include main memory (i.e., a primary memory) and/or cache memory (i.e., memory that can be accessed more quickly than the main memory). Volatile memory may be a storage medium that requires power to maintain the state of data stored by the medium. Non-limiting examples of volatile memory may include various types of random access memory (RAM), such as dynamic random access memory (DRAM) or static random access memory (SRAM).

The compute engine 108 is communicatively coupled to other components of the network appliance 106 via the I/O subsystem 114, which may be embodied as circuitry and/or components to facilitate input/output operations with the processor 110, the memory 112, and other components of the network appliance 106. For example, the I/O subsystem 114 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 114 may form a portion of a SoC and be incorporated, along with one or more of the processor 110, the memory 112, and other components of the network appliance 106, on a single integrated circuit chip.

The one or more data storage devices 116 may be embodied as any type of storage device(s) configured for short-term or long-term storage of data, such as, for example, memory devices and circuits, memory cards, hard disk drives, solid-state drives, or other data storage devices. Each data storage device 116 may include a system partition that stores data and firmware code for the data storage device 116. Each data storage device 116 may also include an operating system partition that stores data files and executables for an operating system.

The communication circuitry 118 may be embodied as any communication circuit, device, or collection thereof, capable of enabling communications between the network appliance 106 and other computing devices, such as the source compute device 102, as well as any network communication enabling devices, such as an access point, network switch/router, etc., to allow communication over the network 104. Accordingly, the communication circuitry 118 may be configured to use any one or more communication technologies (e.g., wireless or wired communication technologies) and associated protocols (e.g., Ethernet, Bluetooth®, Wi-Fi®, WiMAX, LTE, 5G, etc.) to effect such communication.

It should be appreciated that, in some embodiments, the communication circuitry 118 may include specialized circuitry, hardware, or combination thereof to perform pipeline logic (e.g., hardware algorithms) for performing the functions described herein, including processing network packets (e.g., parse received network packets, determine destination computing devices for each received network packets, forward the network packets to a particular buffer queue of a respective host buffer of the network appliance 106, etc.), performing computational functions, etc.

In some embodiments, performance of one or more of the functions of communication circuitry 118 as described herein may be performed by specialized circuitry, hardware, or combination thereof of the communication circuitry 118, which may be embodied as a SoC or otherwise form a portion of a SoC of the network appliance 106 (e.g., incorporated on a single integrated circuit chip along with a processor 110, the memory 112, and/or other components of the network appliance 106). Alternatively, in some embodiments, the specialized circuitry, hardware, or combination thereof may be embodied as one or more discrete processing units of the network appliance 106, each of which may be capable of performing one or more of the functions described herein.

The illustrative communication circuitry 118 includes the NIC 120, which may also be referred to as a host fabric interface (HFI) in some embodiments (e.g., high performance computing (HPC) environments). The NIC 120 may be embodied as any type of firmware, hardware, software, or any combination thereof that facilities communications access between the network appliance 106 and a network (e.g., the network 104). For example, the NIC 120 may be embodied as one or more add-in-boards, daughtercards, network interface cards, controller chips, chipsets, or other devices that may be used by the network appliance 106 to connect with another compute device (e.g., the source compute device 102).

In some embodiments, the NIC 120 may be embodied as part of a SoC that includes one or more processors, or included on a multichip package that also contains one or more processors. Additionally or alternatively, in some embodiments, the NIC 120 may include one or more processing cores (not shown) local to the NIC 120. In such embodiments, the processing core(s) may be capable of performing one or more of the functions described herein. In some embodiments, the NIC 120 may additionally include a local memory (not shown). In such embodiments, the local memory of the NIC 120 may be integrated into one or more components of the network appliance 106 at the board level, socket level, chip level, and/or other levels.

The one or more peripheral devices 122 may include any type of device that is usable to input information into the network appliance 106 and/or receive information from the network appliance 106. The peripheral devices 122 may be embodied as any auxiliary device usable to input information into the network appliance 106, such as a keyboard, a mouse, a microphone, a barcode reader, an image scanner, etc., or output information from the network appliance 106, such as a display, a speaker, graphics circuitry, a printer, a projector, etc. It should be appreciated that, in some embodiments, one or more of the peripheral devices 122 may function as both an input device and an output device (e.g., a touchscreen display, a digitizer on top of a display screen, etc.). It should be further appreciated that the types of peripheral devices 122 connected to the network appliance 106 may depend on, for example, the type and/or intended use of the network appliance 106. Additionally or alternatively, in some embodiments, the peripheral devices 122 may include one or more ports, such as a USB port, for example, for connecting external peripheral devices to the network appliance 106.

The source compute device 102 may be embodied as any type of computation or computer device capable of performing the functions described herein, including, without limitation, a smartphone, a mobile computing device, a tablet computer, a laptop computer, a notebook computer, a computer, a server (e.g., stand-alone, rack-mounted, blade, etc.), a sled (e.g., a compute sled, an accelerator sled, a storage sled, a memory sled, etc.), a network appliance (e.g., physical or virtual), a web appliance, a distributed computing system, a processor-based system, and/or a multiprocessor system. While not illustratively shown, it should be appreciated that source compute device 102 includes similar and/or like components to those of the illustrative network appliance 106. As such, figures and descriptions of the like/similar components are not repeated herein for clarity of the description with the understanding that the description of the corresponding components provided above in regard to the network appliance 106 applies equally to the corresponding components of the source compute device 102. Of course, it should be appreciated that the computing devices may include additional and/or alternative components, depending on the embodiment.

The network 104 may be embodied as any type of wired or wireless communication network, including but not limited to a wireless local area network (WLAN), a wireless personal area network (WPAN), an edge network (e.g., a multi-access edge computing (MEC) network), a fog network, a cellular network (e.g., Global System for Mobile Communications (GSM), Long-Term Evolution (LTE), 5G, etc.), a telephony network, a digital subscriber line (DSL) network, a cable network, a local area network (LAN), a wide area network (WAN), a global network (e.g., the Internet), or any combination thereof. It should be appreciated that, in such embodiments, the network 104 may serve as a centralized network and, in some embodiments, may be communicatively coupled to another network (e.g., the Internet). Accordingly, the network 104 may include a variety of other virtual and/or physical network computing devices (e.g., routers, switches, network hubs, servers, storage devices, compute devices, etc.), as needed to facilitate communication between the network appliance 106 and the source compute device 102, which are not shown to preserve clarity of the description.

Referring now to FIG. 2, in use, the network appliance 106 establishes an environment 200 during operation. The illustrative environment 200 includes a network traffic ingress/egress manager 208, a network traffic pattern analyzer 210, and a virtual router 212. The various components of the environment 200 may be embodied as hardware, firmware, software, or a combination thereof. As such, in some embodiments, one or more of the components of the environment 200 may be embodied as circuitry or collection of electrical devices (e.g., network traffic ingress/egress management circuitry 208, network traffic pattern analyzer circuitry 210, virtual routing circuitry 212, etc.). It should be appreciated that one or more functions described herein as being performed by the network traffic ingress/egress management circuitry 208, the network traffic pattern analyzer circuitry 210, and/or the virtual routing circuitry 212 may be performed, at least in part, by one or more other components of the network appliance 106, such as the compute engine 108, the I/O subsystem 114, the communication circuitry 118 (e.g., the NIC 120), an ASIC, a programmable circuit such as an FPGA, and/or other components of the network appliance 106. It should be further appreciated that associated instructions may be stored in the memory 112, the data storage device(s) 116, and/or other data storage location, which may be executed by one of the processors 110 and/or other computational processor of the network appliance 106.

Additionally, in some embodiments, one or more of the illustrative components may form a portion of another component and/or one or more of the illustrative components may be independent of one another. Further, in some embodiments, one or more of the components of the environment 200 may be embodied as virtualized hardware components or emulated architecture, which may be established and maintained by the NIC 120, the compute engine 108, and/or other software/hardware components of the network appliance 106. It should be appreciated that the network appliance 106 may include other components, sub-components, modules, sub-modules, logic, sub-logic, and/or devices commonly found in a computing device (e.g., device drivers, interfaces, etc.), which are not illustrated in FIG. 2 for clarity of the description.

In the illustrative environment 200, the network appliance 106 additionally includes network traffic data 202, algorithm design data 204, and algorithm performance data 206, each of which may be accessed by the various components and/or sub-components of the network appliance 106. Further, each of the network traffic data 202, the algorithm design data 204, and the algorithm performance data 206 may be accessed by the various components of the network appliance 106. Additionally, it should be appreciated that in some embodiments the data stored in, or otherwise represented by, each of the network traffic data 202, the algorithm design data 204, and the algorithm performance data 206 may not be mutually exclusive relative to each other. For example, in some implementations, data stored in the network traffic data 202 may also be stored as a portion of one or more of the algorithm design data 204 and/or the algorithm performance data 206, or in another alternative arrangement. As such, although the various data utilized by the network appliance 106 is described herein as particular discrete data, such data may be combined, aggregated, and/or otherwise form portions of a single or multiple data sets, including duplicative copies, in other embodiments.

The network traffic ingress/egress manager 208, which may be embodied as hardware, firmware, software, virtualized hardware, emulated architecture, and/or a combination thereof as discussed above, is configured to receive inbound and route/transmit outbound network traffic. To do so, the network traffic ingress/egress manager 208 is configured to facilitate inbound/outbound network communications (e.g., network traffic, network packets, network flows, etc.) to and from the network appliance 106. For example, the network traffic ingress/egress manager 208 is configured to manage (e.g., create, modify, delete, etc.) connections to physical and virtual network ports (i.e., virtual network interfaces) of the network appliance 106 (e.g., via the communication circuitry 118), as well as the ingress/egress buffers/queues associated therewith. In some embodiments, information associated with the received network traffic (e.g., an associated descriptor, a pointer to a location in memory in which at least a portion of the received network traffic has been stored, a characteristic of the received network traffic, etc.) and/or network-related information (e.g., a number of active flows, a number of rules, a number of wild card formats, a required update rate, etc.) may be stored in the network traffic data.

The network traffic pattern analyzer 210, which may be embodied as hardware, firmware, software, virtualized hardware, emulated architecture, and/or a combination thereof as discussed above, is configured to analyze network traffic received by the network appliance 106 and identify any patterns associated with the received network traffic. For example, the network traffic pattern analyzer 210 may be configured to identify access patterns based on information collected that is associated with received network traffic, such as traffic patterns (e.g., patterns of distribution of the network traffic to each active flow), rule set patterns (e.g., access patterns of rules, rule format distribution, etc.), wild card patterns (e.g., access patterns to wild cards), access patterns of flows (e.g., bursty or non-burtsy, sequential or random, etc.), and/or the like.

The virtual router 212, which may be embodied as hardware, firmware, software, virtualized hardware, emulated architecture, and/or a combination thereof as discussed above, is configured to perform routing/switching functionality of the network appliance 106 using a flow classification algorithm. To do so, the illustrative virtual router 212 includes a candidate classification algorithm design picker 214, a classification algorithm deployment manager 216, a classification algorithm performance monitor 218, and a classification algorithm design selector 220, each of which may be embodied as hardware, firmware, software, virtualized hardware, emulated architecture, and/or a combination thereof. For example, in some embodiments, one or more of the candidate classification algorithm design picker 214, the classification algorithm deployment manager 216, the classification algorithm performance monitor 218, and the classification algorithm design selector 220 may be embodied as circuitry or collection of electrical devices (e.g., candidate classification algorithm design picker circuitry 214, classification algorithm deployment management circuitry 216, classification algorithm performance monitoring circuitry 218, classification algorithm design selector circuitry 220, etc.).

The candidate classification algorithm design picker 214 is configured to identify a set of candidate classification algorithms from a plurality of candidate classification algorithms. In other words, the candidate classification algorithm design picker 214 is configured to select a set of candidate classification algorithms that can be used (e.g., tested, ranked, and selected) for the classification flow operation (e.g., to be performed by the virtual router). It should be appreciated that multiple high-level classification algorithm designs may be selectable by the candidate classification algorithm design picker 214. For example, the classification algorithm designs may include tuple space search algorithms in which headers of the received network packets go through each table to do masking and searching to look for the rules, multi-bit trie based search algorithms for IP prefix matching, exact match hash tables, and/or a combination thereof (e.g., a combination of a hash table cache and a tuple space search).

It should be appreciated that each classification algorithm design may have several sets of configurations. In an illustrative example, a multi-bit trie can have different stride sizes. Additionally, the hash table can have different numbers of way associativity and hash functions which will affect the lookup speed and table load factor. Accordingly, it should be further appreciated that such options can generate multiple candidate classification algorithm designs. For example, a first classification algorithm design may have two different classification algorithm design configurations, a second classification algorithm design may have three different classification algorithm design configurations, and a third classification algorithm design may have two different classification algorithm design configurations, for a total of seven different classification algorithm design configurations. In some embodiments, information associated with the classification algorithm designs may be stored in the algorithm design data 204.

The classification algorithm deployment manager 216 is configured to deploy the classification algorithms to one or more processors (e.g., one or more of the processors 110 of FIG. 1), or processor cores. To do so, the classification algorithm deployment manager 216 is configured to identify which processor(s) a classification algorithm is to be deployed on (i.e., which processors/cores are to be assigned the task of performing the flow classification operations based on the applicable classification algorithm). Additionally, the classification algorithm deployment manager 216 is configured to identify which classification algorithm is to be deployed on which processor/core. It should be appreciated that one classification algorithm can be run on more than one processor/core at a given time. It should be further appreciated that multiple classification algorithms can be run on multiple processors/cores (e.g., in parallel) at a given time.

The classification algorithm performance monitor 218 is configured to collect performance data associated with the implemented classification algorithm design. The performance data may include any type of resource usage data that is usable to rank a performance of one classification algorithm against another classification algorithm. For example, the classification algorithm performance monitor 218 may be configured to collect throughput data, compute data, power usage data, etc. In some embodiments, the collected performance data may be stored in the algorithm performance data 206.

The classification algorithm design selector 220 is configured to select a preferred classification algorithm design for flow classification that is to be deployed (e.g., by the classification algorithm deployment manager 216) across one or more processors/cores. To do so, the classification algorithm design selector 220 is configured to rank each candidate classification algorithm based on the performance data (e.g., as may be collected by the classification algorithm performance monitor 218) collected for each tested candidate classification algorithm. To select the preferred classification algorithm design, the classification algorithm design selector 220 is configured to select the highest ranking algorithm that exceeds a predetermined performance threshold. It should be appreciated that the classification algorithm design selector 220 may also apply a level of confidence to each tested candidate classification algorithm, relative to the performance data collected, such that the classification algorithm design selector 220 does not select the preferred classification algorithm design until a sufficient level of confidence has been achieved for each tested candidate classification algorithm.

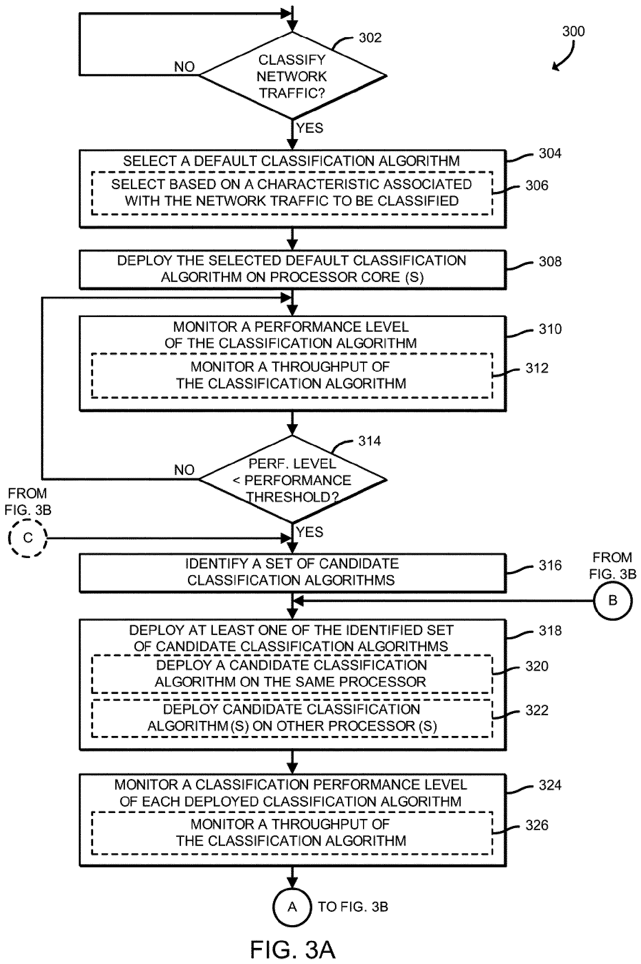

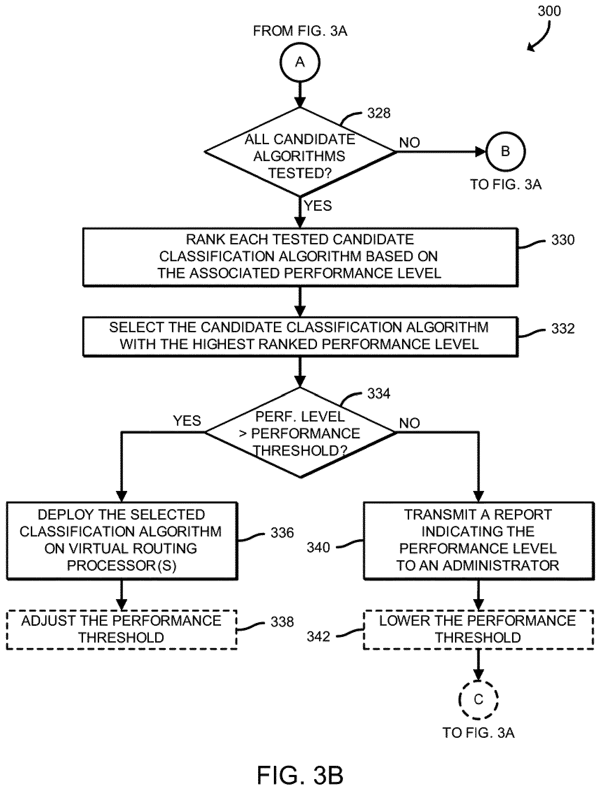

Referring now to FIGS. 3A and 3B, a method 300 for dynamically selecting resources for virtual switching is shown, which may be executed by a network appliance (e.g., the network appliance 106 of FIGS. 1 and 2), or more particularly by the virtual router 212 of the network appliance 106 of FIG. 2. The method 300 begins in block 302, in which the virtual router 212 determines whether to classify network traffic based on flow (i.e., perform a flow classification operation on received network traffic). If so, the method 300 advances to block 304, in which the virtual router 212 selects a default classification algorithm from a plurality of classification algorithms. To do so, in block 306, the virtual router 212 may select the default classification algorithm based on a characteristic associated with the network traffic to be classified. The network traffic characteristic may be any type of identifying information associated with the network traffic, such as an IP address, a media access control (MAC) address, a port, etc.

In block 308, the virtual router 212 deploys the selected default classification algorithm on one or more processors/cores. In block 310, the virtual router 212 monitors a performance level of the classification algorithm. For example, in block 312, the virtual router 212 may monitor a throughput of the classification algorithm in operation. It should be appreciated that, in other embodiments, additional and/or alternative telemetry metrics may be monitored, such as latency, jitter, etc. In block 314, the virtual router 212 determines whether the monitored performance level is less than a performance threshold (e.g., a minimum performance level that may be assigned by a controller/administrator). If not, the method 300 returns to block 310 to continue monitoring the performance level of the classification algorithm; otherwise, the method 300 proceeds to block 316.

In block 316, the virtual router 212 identifies a set of candidate classification algorithms from the available classification algorithms (e.g., based on the classification algorithm designs and different configurations for each classification algorithm design). In block 318, the virtual router 212 deploys at least one of the identified set of candidate classification algorithms. For example, in block 320, the virtual router 212 may deploy a candidate classification algorithm on the same processor/core as the default classification algorithm was deployed. Additionally or alternatively, in block 322, the virtual router 212 may deploy one or more candidate classification algorithms on a corresponding one or more other processors/cores.

In block 324, the virtual router 212 monitors a performance level of each of the one or more deployed classification algorithms. For example, in block 326, the virtual router 212 may monitor a throughput of each deployed classification algorithm in operation across the classified flows. As noted previously, it should be appreciated that, in other embodiments, additional and/or alternative telemetry metrics may be monitored, such as latency, jitter, etc. In block 328, shown in FIG. 3B, the virtual router 212 determines whether all of the candidate algorithms have been tested (i.e., to get a corresponding performance level of each candidate algorithm). In some embodiments, the virtual router 212 may test each candidate algorithm more than once until a degree of confidence in the resulting performance levels has been achieved.

If all of the candidate algorithms have not been tested, or sufficiently tested to an acceptable degree of confidence, the method 300 returns to block 318, in which the virtual router 212 deploys one or more of the candidate classification algorithms. Otherwise, if all of the candidate algorithms have been tested, and to an acceptable degree of confidence, if applicable, the method 300 proceeds to block 330. In block 330, the virtual router 212 ranks each tested classification algorithm based on the associated performance level. In block 332, the virtual router 212 selects the candidate classification algorithm with the highest ranked performance level (e.g., the highest throughput level).

In block 334, the virtual router 212 determines whether the performance level of the selected candidate classification algorithm exceeds a performance threshold (e.g., a minimum throughput threshold). If so, method 300 branches to block 336, in which the virtual router 212 deploys the selected classification algorithm on each of the applicable virtual routing processor(s)/core(s) configured to perform the flow classification operations. In some embodiments, in block 338, the virtual router 212 may additionally adjust the performance threshold relative to the performance level of the selected candidate classification algorithm.

However, referring back to block 334, if the virtual router 212 determines that the performance level of the selected candidate classification algorithm does not exceed the performance threshold, the method 300 branches to block 340. In block 340, the virtual router 212 transmits a report to a controller/administrator that indicates the performance level of the selected candidate classification algorithm does not exceed the performance threshold. Accordingly, in block 342, the virtual router 212 may automatically lower the performance threshold relative to the performance level of the selected candidate classification algorithm (e.g., lower the performance threshold to a value less than the performance level of the selected candidate classification algorithm).

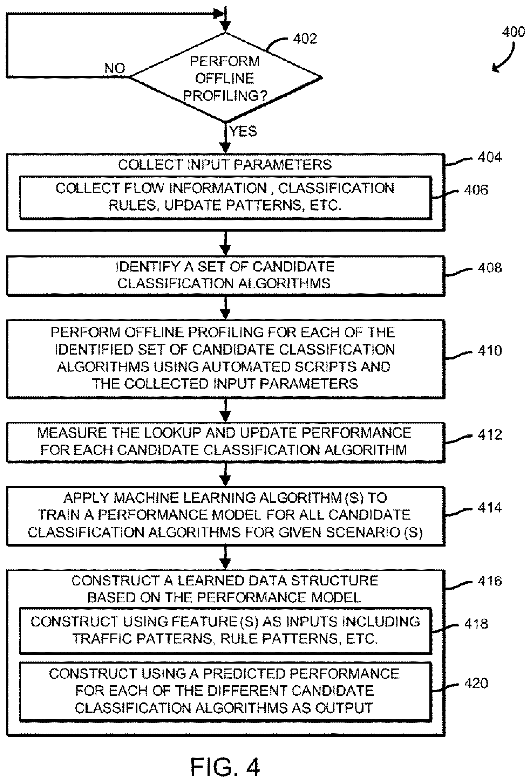

Referring now to FIG. 4, a method 400 for performing offline profiling is shown, which may be executed by a network appliance (e.g., the network appliance 106 of FIGS. 1 and 2), or, at least in part, by the virtual router 212 of the network appliance 106 of FIG. 2. It should be appreciated that, in some embodiments, in order to reduce the overhead of testing each candidate classification algorithm as described in the method 300 of FIG. 3, offline profiling may be performed. It should be further appreciated that there are many factors that impact flow classification performance. Accordingly, by using domain knowledge and ranking the classification algorithms, the most important factors that need to be considered in the adaptive algorithm can be identified. For example, such factors may include a number of active flows, access pattern of flows (e.g., bursty or non-bursty, sequential or random), a number of rules, access pattern of rules, rule format distribution (e.g., many wildcard rules or same exact match format), an update rate, etc.

The method 400 begins in block 402, in which the network appliance 106 determines whether to perform the offline profiling. If so, the method 400 advances to block 404, in which the network appliance 106 collects input parameters to perform the offline profiling. For example, in block 406, the network appliance 106 can collect flow information, classification rules, update patterns, etc., related to the expected network traffic. In block 408, the network appliance 106 identifies a set of candidate classification algorithms. In block 410, the network appliance 106 performs offline profiling for each of the identified set of candidate classification algorithms using automated scripts based on the collected input parameters.

In block 412, the network appliance 106 measures lookup and update performance levels for each candidate classification algorithm. In block 414, the network appliance 106 applies one or more machine learning algorithms to train a performance model for all of the candidate classification algorithms under various conditions (e.g., given various network traffic scenarios/patterns). It should be appreciated that, with offline profiling, extensive experiments (e.g., provided by automatic scripts) can be run with different input parameters (e.g., flows, rules, update pattern, etc.), and measure the lookup and update performance for all underlying algorithm design candidates. As such, these data sets are used as the training set for the machine learning algorithm to learn the performance for given algorithm design with given usages (indicated by a set of input parameters). Furthermore, by employing a machine learning algorithm (e.g., Random Forest Regression (RFR)) the performance with different algorithm designs for given scenarios can be predicted.

In block 416, the network appliance 106 constructs a learned data structure (e.g., a lookup table, a state machine, etc.) based the performance model. To construct the learned data structure, in block 418, the network appliance 106 uses various features as inputs, including network traffic patterns, rule patterns, etc. Additionally, in block 420, the network appliance 106 constructs the learned data structure using a predicted performance for each of the different candidate classification algorithms as output. In an illustrative example, to mitigate the costs of real-time machine learning overhead, a lookup table can be constructed using the offline learning process by using impact factors (e.g., rules, flows, etc.) as inputs and a predicted performance (e.g., based on the performance model) for different algorithm designs as outputs. In some embodiments, during real-time virtual router operation, the virtual router may continuously sample traffic characteristics. Accordingly, in such embodiments, when the performance level drops below the performance threshold, the virtual router can perform a lookup operation on the lookup table and obtain the best algorithm design to achieve optimal performance, as opposed to performing the real-time performance testing for different algorithm designs as described above.

## Claims

1. A network appliance (106, 200) for classifying network flows using adaptive virtual routing, the network appliance comprising:
one or more processors (110); and
virtual switch operation mode controller circuitry (212) adapted to
identify a set of candidate classification algorithms from a plurality of classification algorithm designs to perform a flow classification operation;
deploy each of the candidate classification algorithms to a processor of the one or more processors;
monitor a performance level of each of the deployed candidate classification algorithms;
identify a candidate classification algorithm of the deployed candidate classification algorithms with a higher performance level than the performance level of each of the other deployed candidate classification algorithms; and
deploy the identified candidate classification algorithm on each of the one or more processors configured to perform the flow classification operation.

2. The network appliance of claim 1, wherein a candidate classification algorithm comprises one of the plurality of classification algorithm designs having a unique configuration relative to the other candidate classification algorithms.

3. The network appliance of claim 1, wherein to deploy each of the candidate classification algorithms to the processor comprises to deploy each of the candidate classification algorithms serially to the one or more processors.

4. The network appliance of claim 1, wherein the virtual switch operation mode controller circuitry (212) is further adapted to compare the performance level of the identified candidate classification algorithm to a performance threshold, and
wherein to deploy the identified candidate classification algorithm comprises to deploy the identified candidate classification algorithm subsequent to having determined the performance level of the identified candidate classification algorithm is greater than the performance threshold.

5. The network appliance of claim 1, wherein the virtual switch operation mode controller circuitry (212) is further adapted to perform an offline profiling operation, and wherein to perform the offline profiling operation comprises to:
collect a plurality of input parameters;
identify a plurality of candidate classification algorithms from the plurality of classification algorithm designs to perform a flow classification operation; and
apply, for each of the plurality of candidate classification algorithms, one or more automated scripts using the plurality of collected input parameters.

6. The network appliance of claim 5, wherein to perform the offline profiling operation further comprises to:
measure the performance level for each of the plurality of candidate classification algorithms as a result of the applied automated scripts;
apply, for each of the plurality of candidate classification algorithms, one or more machine learning algorithms to train a performance model for the plurality of candidate classification algorithms in a plurality of network traffic conditions; and
construct a learned data structure as a function of the performance model.

7. The network appliance of claim 6, wherein the virtual switch operation mode controller circuitry (212) is further adapted to
monitor a present performance level of the identified candidate classification algorithm;
compare the present performance level of the identified candidate classification algorithm against a performance threshold; and
identify, in response to a determination that the present performance level of the identified candidate classification algorithm is less than the performance threshold, a replacement classification algorithm that is predicted to exceed the performance threshold based on the learned data structure.

8. A method (300, 400) for classifying network flows using adaptive virtual routing, the method comprising:
Identifying (316), by a network appliance, a set of candidate classification algorithms from a plurality of classification algorithm designs to perform a flow classification operation;
Deploying (318), by the network appliance, each of the candidate classification algorithms to a processor of one or more processors of the network appliance;
Monitoring (324), by the network appliance, a performance level of each of the deployed candidate classification algorithms;
Identifying (332), by the network appliance, a candidate classification algorithm of the deployed candidate classification algorithms with a higher performance level than the performance level of each of the other deployed candidate classification algorithms; and
Deploying (336), by the network appliance, the identified candidate classification algorithm on each of the one or more processors configured to perform the flow classification operation.

9. The method of claim 8, wherein a candidate classification algorithm comprises one of the plurality of classification algorithm designs having a unique configuration relative to the other candidate classification algorithms.

10. The method of claim 8, wherein the processor includes a plurality of processor cores, and wherein deploying (318) each of the candidate classification algorithms to the processor comprises deploying each of the candidate classification algorithms to a respective one of the processor cores in parallel.

11. The method of claim 8, wherein further comprising comparing (334), by the network appliance, the performance level of the identified candidate classification algorithm to a performance threshold, and wherein deploying (336) the identified candidate classification algorithm comprises deploying the identified candidate classification algorithm subsequent to having determined the performance level of the identified candidate classification algorithm is greater than the performance threshold.

12. The method of claim 8, further comprising performing (402), by the network appliance, an offline profiling operation, and wherein performing the offline profiling operation comprises: collecting a plurality of input parameters;
identifying (408) a plurality of candidate classification algorithms from the plurality of classification algorithm designs to perform a flow classification operation; and
applying (414), for each of the plurality of candidate classification algorithms, one or more automated scripts using the plurality of collected input parameters.

13. The method of claim 12, wherein performing the offline profiling operation comprises:
measuring (412) the performance level for each of the plurality of candidate classification algorithms as a result of the applied automated scripts;
applying (414), for each of the plurality of candidate classification algorithms, one or more machine learning algorithms to train a performance model for the plurality of candidate classification algorithms in a plurality of network traffic conditions;
constructing (416) a learned data structure as a function of the performance model, monitoring a present performance level of the identified candidate classification algorithm;
comparing the present performance level of the identified candidate classification algorithm against a performance threshold; and
identifying, in response to a determination that the present performance level of the identified candidate classification algorithm is less than the performance threshold, a replacement classification algorithm that is predicted to exceed the performance threshold based on the learned data structure.

14. One or more machine-readable storage media (100, 200) comprising a plurality of instructions stored thereon that, when executed, causes a network appliance to perform the method of any of claims 8-13.

15. A network appliance (106, 200) for classifying network flows using adaptive virtual routing, the network appliance comprising means for performing the method of any of claims 8-13.

## Patentansprüche

1. Netzwerkgerät (106, 200) zum Klassifizieren von Netzwerkflüssen unter Verwendung von adaptivem virtuellem Routing, wobei das Netzwerkgerät umfasst:
einen oder mehrere Prozessoren (110); und
eine Virtuelle-Schalter-Betriebsmodus-Controller-Schaltungsanordnung (212) ausgelegt zum Identifizieren eines Satzes von Kandidatenklassifikationsalgorithmen unter mehreren Klassifikationsalgorithmendesigns zum Durchführen einer Flussklassifikationsoperation;
Anwenden jedes der Kandidatenklassifikationsalgorithmen auf einem Prozessor des einen oder der mehreren Prozessoren;
Überwachen eines Leistungsgrads jedes der angewendeten Kandidatenklassifikationsalgorithmen;
Identifizieren eines Kandidatenklassifikationsalgorithmus der angewendeten Kandidatenklassifikationsalgorithmen mit einem höheren Leistungsgrad als der Leistungsgrad jeder der anderen angewendeten Kandidatenklassifikationsalgorithmen; und
Anwenden des identifizierten Kandidatenklassifikationsalgorithmus auf den einen oder die mehreren Prozessoren ausgelegt zum Durchführen der Flussklassifikationsoperation.

2. Netzwerkgerät nach Anspruch 1, wobei ein Kandidatenklassifikationsalgorithmus einen der mehreren Klassifikationsalgorithmusdesigns mit einer eindeutigen Konfiguration relativ zu den anderen Kandidatenklassifikationsalgorithmen umfasst.

3. Netzwerkgerät nach Anspruch 1, wobei das Anwenden jedes der Kandidatenklassifikationsalgorithmen auf den Prozessor das serielle Anwenden jedes der Kandidatenklassifikationsalgorithmen auf dem einen oder den mehreren Prozessoren umfasst.

4. Netzwerkgerät nach Anspruch 1, wobei die Virtuelle-Schalter-Betriebsmodus-Controller-Schaltungsanordnung (212) weiter ausgelegt ist zum Vergleichen des Leistungsgrads des identifizierten Kandidatenklassifikationsalgorithmus mit einem Leistungsschwellwert, und
wobei das Anwenden des identifizierten Kandidatenklassifikationsalgorithmus das Anwenden des identifizierten Kandidatenklassifikationsalgorithmus umfasst, nachdem bestimmt worden ist, dass der Leistungsgrad des identifizierten Kandidatenklassifikationsalgorithmus größer ist als der Leistungsschwellwert.

5. Netzwerkgerät nach Anspruch 1, wobei die Virtuelle-Schalter-Betriebsmodus-Controller-Schaltungsanordnung (212) weiter ausgelegt ist zum Durchführen einer Offline-Profilierungsoperation, und wobei das Durchführen der Offline-Profilierungsoperation umfasst:
Sammeln von mehreren Eingangsparametern;
Identifizieren von mehreren Kandidatenklassifikationsalgorithmen unter den mehreren Klassifikationsalgorithmusdesigns zum Durchführen einer Flussklassifikationsoperation; und
Anwenden, für jeden der mehreren Kandidatenklassifikationsalgorithmen, eines oder mehrerer automatisierter Scripts unter Verwendung der mehreren gesammelten Eingangsparameter.

6. Netzwerkgerät nach Anspruch 5, wobei das Durchführen der Offline-Profilierungsoperation weiter umfasst:
Messen des Leistungsgrads für jeden der mehreren Kandidatenklassifikationsalgorithmen infolge der angewendeten automatisierten Scripts;
Anwenden, für jeden der mehreren Kandidatenklassifikationsalgorithmen, einen oder mehrere Maschinenlernalgorithmen zum Trainieren eines Leistungsmodells für die mehreren Kandidatenklassifikationsalgorithmen in mehreren Netzwerkverkehrsbedingungen; und
Konstruieren einer Gelernte-Daten-Struktur als Funktion des Leistungsmodells.

7. Netzwerkgerät nach Anspruch 6, wobei die Virtuelle-Schalter-Betriebsmodus-Controller-Schaltungsanordnung (212) weiter ausgelegt ist zum:
Überwachen eines aktuellen Leistungsgrads des identifizierten Kandidatenklassifikationsalgorithmus;
Vergleichen des aktuellen Leistungsgrads des identifizierten Kandidatenklassifikationsalgorithmus mit einem Leistungsschwellwert; und
Identifizieren, als Reaktion auf eine Bestimmung, dass der gegenwärtige Leistungsgrad des identifizierten Kandidatenklassifikationsalgorithmus unter dem Leistungsschwellwert liegt, eines Ersatzklassifikationsalgorithmus, von dem vorhergesagt ist, dass er den Leistungsschwellwert übersteigt, auf Basis der Gelernte-Daten-Struktur.

8. Verfahren (300, 400) zum Klassifizieren von Netzwerkflüssen unter Verwendung von adaptivem virtuellem Routing, wobei das Verfahren umfasst:
Identifizieren (316), durch ein Netzwerkgerät, eines Satzes von Kandidatenklassifikationsalgorithmen unter mehreren Klassifikationsalgorithmusdesigns zum Durchführen einer Flussklassifikationsoperation;
Anwenden (318), durch das Netzwerkgerät, jeder der Kandidatenklassifikationsalgorithmen auf einen Prozessor von einem oder mehreren Prozessoren des Netzwerkgeräts;
Überwachen (324), durch das Netzwerkgerät, eines Leistungsgrads jedes der angewendeten Kandidatenklassifikationsalgorithmen;
Identifizieren (332), durch das Netzwerkgerät, eines Kandidatenklassifikationsalgorithmus der angewendeten Kandidatenklassifikationsalgorithmen mit einem höheren Leistungsgrad als der Leistungsgrad jedes der anderen angewendeten Kandidatenklassifikationsalgorithmen; und
Anwenden (336), durch das Netzwerkgerät, des identifizierten Kandidatenklassifikationsalgorithmus auf jeden des einen oder der mehreren Prozessoren ausgelegt zum Durchführen der Flussklassifikationsoperation.

9. Verfahren nach Anspruch 8, wobei ein Kandidatenklassifikationsalgorithmus einen der mehreren Klassifikationsalgorithmusdesigns mit einer eindeutigen Konfiguration relativ zu den anderen Kandidatenklassifikationsalgorithmen umfasst.

10. Verfahren nach Anspruch 8, wobei der Prozessor mehrere Prozessorkerne enthält und wobei das Anwenden (318) jedes der Kandidatenklassifikationsalgorithmen auf den Prozessor das parallele Anwenden jedes der Kandidatenklassifikationsalgorithmen auf einen jeweiligen der Prozessorkerne umfasst.

11. Verfahren nach Anspruch 8, weiter umfassend das Vergleichen (334), durch das Netzwerkgerät, des Leistungsgrads des identifizierten Kandidatenklassifikationsalgorithmus mit einem Leistungsgrad, und wobei das Anwenden (336) des identifizierten Kandidatenklassifikationsalgorithmus das Anwenden des identifizierten Kandidatenklassifikationsalgorithmus umfasst, nachdem bestimmt worden ist, dass der Leistungsgrad des identifizierten Kandidatenklassifikationsalgorithmus größer ist als der Leistungsschwellwert.

12. Verfahren nach Anspruch 8, weiter umfassend das Durchführen (402), durch das Netzwerkgerät, einer Offline-Profilierungsoperation, und wobei das Durchführen der Offline-Profilierungsoperation umfasst:
Sammeln mehrerer Eingangsparameter;
Identifizieren (408) von mehreren Kandidatenklassifikationsalgorithmen unter den mehreren Klassifikationsalgorithmusdesigns zum Durchführen einer Flussklassifikationsoperation; und
Anwenden (414), für jeden der mehreren Kandidatenklassifikationsalgorithmen, einen oder mehrere automatisierte Scripts unter Verwendung der mehreren gesammelten Eingangsparameter.

13. Verfahren nach Anspruch 12, wobei das Durchführen der Offline-Profilierungsoperation umfasst:
Messen (412) des Leistungsgrads für jeden der mehreren Kandidatenklassifikationsalgorithmen infolge der angewendeten automatisierten Scripts;
Anwenden (414), für jeden der mehreren Kandidatenklassifikationsalgorithmen, einen oder mehrere Maschinenlernalgorithmen zum Trainieren eines Leistungsmodells für die mehreren Kandidatenklassifikationsalgorithmen in mehreren Netzwerkverkehrsbedingungen;
Konstruieren (416) einer Gelernte-Daten-Struktur als Funktion des Leistungsmodells;
Vergleichen des aktuellen Leistungsgrads des identifizierten Kandidatenklassifikationsalgorithmus mit einem Leistungsschwellwert; und
Identifizieren, als Reaktion auf eine Bestimmung, dass der gegenwärtige Leistungsgrad des identifizierten Kandidatenklassifikationsalgorithmus unter dem Leistungsschwellwert liegt, eines Ersatzklassifikationsalgorithmus, von dem vorhergesagt ist, dass er den Leistungsschwellwert übersteigt, auf Basis der Gelernte-Daten-Struktur.

14. Ein oder mehrere maschinenlesbare Speichermedien (100, 200) umfassend mehrere darauf gespeicherte Anweisungen, die bei Ausführung bewirken, dass ein Netzwerkgerät das Verfahren nach einem der Ansprüche 8-13 durchführt.

15. Netzwerkgerät (106, 200) zum Klassifizieren von Netzwerkflüssen unter Verwendung von adaptivem virtuellem Routing, wobei das Netzwerkgerät Mittel umfasst zum Durchführen des Verfahrens nach einem der Ansprüche 8-13.

## Revendications

1. Appareil (106, 200) de réseau servant à classifier des flux de réseau à l'aide d'un routage virtuel adaptatif, l'appareil de réseau comportant :
un ou plusieurs processeurs (110) ; et
une circuiterie (212) de contrôleur de mode de fonctionnement de commutateur virtuel prévue pour :
identifier un ensemble d'algorithmes candidats de classification parmi une pluralité de types d'algorithmes de classification pour effectuer une opération de classification de flux ;
déployer chacun des algorithmes candidats de classification vers un processeur parmi le ou les processeurs ;
surveiller un niveau de performances de chacun des algorithmes candidats de classification déployés ;
identifier un algorithme candidat de classification parmi les algorithmes candidats de classification déployés présentant un niveau de performances supérieur au niveau de performances de chacun des autres algorithmes candidats de classification déployés ; et
déployer l'algorithme candidat de classification identifié sur le ou chacun des processeurs configurés pour effectuer l'opération de classification de flux.

2. Appareil de réseau selon la revendication 1, un algorithme candidat de classification comportant un type de la pluralité de types d'algorithmes de classification présentant une configuration unique par rapport aux autres algorithmes candidats de classification.

3. Appareil de réseau selon la revendication 1, le déploiement de chacun des algorithmes candidats de classification vers le processeur comportant le déploiement sériel de chacun des algorithmes candidats de classification vers le ou les processeurs.

4. Appareil de réseau selon la revendication 1, la circuiterie (212) de contrôleur de mode de fonctionnement de commutateur virtuel étant en outre prévue pour comparer le niveau de performances de l'algorithme candidat de classification identifié à un seuil de performances, et le déploiement de l'algorithme candidat de classification identifié comportant le déploiement de l'algorithme candidat de classification identifié après qu'il a été déterminé que le niveau de performances de l'algorithme candidat de classification identifié est supérieur au seuil de performances.

5. Appareil de réseau selon la revendication 1, la circuiterie (212) de contrôleur de mode de fonctionnement de commutateur virtuel étant en outre prévue pour effectuer une opération de création de profil hors ligne, et la réalisation de l'opération de création de profil hors ligne comportant les actions de :
recueillir une pluralité de paramètres d'entrée ;
identifier une pluralité d'algorithmes candidats de classification parmi la pluralité de types d'algorithmes de classification pour effectuer une opération de classification de flux ; et
appliquer, pour chaque algorithme de la pluralité d'algorithmes candidats de classification, un ou plusieurs scripts automatisés en utilisant la pluralité de paramètres d'entrée recueillis.

6. Appareil de réseau selon la revendication 5, la réalisation de l'opération de création de profil hors ligne comportant en outre les actions de :
mesurer le niveau de performances pour chaque algorithme de la pluralité d'algorithmes candidats de classification résultant des scripts automatisés appliqués ;
appliquer, pour chaque algorithme de la pluralité d'algorithmes candidats de classification, un ou plusieurs algorithmes d'apprentissage automatique afin d'entraîner un modèle de performances pour la pluralité d'algorithmes candidats de classification dans une pluralité de conditions de trafic de réseau ; et
construire une structure de données apprise en fonction du modèle de performances.

7. Appareil de réseau selon la revendication 6, la circuiterie (212) de contrôleur de mode de fonctionnement de commutateur virtuel étant en outre prévue pour :
surveiller un niveau actuel de performances de l'algorithme candidat de classification identifié ;
comparer le niveau actuel de performances de l'algorithme candidat de classification identifié à un seuil de performances ; et
identifier, en réponse à une détermination selon laquelle le niveau actuel de performances de l'algorithme candidat de classification identifié est inférieur au seuil de performances, un algorithme de classification de substitution dont il est prédit qu'il dépasse le seuil de performances d'après la structure de données apprise.

8. Procédé (300, 400) de classification de flux de réseau à l'aide d'un routage virtuel adaptatif, le procédé comportant :
l'identification (316), par un appareil de réseau, d'un ensemble d'algorithmes candidats de classification parmi une pluralité de types d'algorithmes de classification pour effectuer une opération de classification de flux ;
le déploiement (318), par l'appareil de réseau, de chacun des algorithmes candidats de classification vers un processeur parmi un ou plusieurs processeurs de l'appareil de réseau ;
la surveillance (324), par l'appareil de réseau, d'un niveau de performances de chacun des algorithmes candidats de classification déployés ;
l'identification (332), par l'appareil de réseau, d'un algorithme candidat de classification parmi les algorithmes candidats de classification déployés présentant un niveau de performances supérieur au niveau de performances de chacun des autres algorithmes candidats de classification déployés ; et
le déploiement (336), par l'appareil de réseau, de l'algorithme candidat de classification identifié sur le ou chacun des processeurs configurés pour effectuer l'opération de classification de flux.

9. Procédé selon la revendication 8, un algorithme candidat de classification comportant un type de la pluralité de types d'algorithmes de classification présentant une configuration unique par rapport aux autres algorithmes candidats de classification.

10. Procédé selon la revendication 8, le processeur comprenant une pluralité de cœurs de processeur, et le déploiement (318) de chacun des algorithmes candidats de classification vers le processeur comportant le déploiement en parallèle de chacun des algorithmes candidats de classification vers un cœur respectif parmi les cœurs de processeur.

11. Procédé selon la revendication 8, comportant en outre la comparaison (334), par l'appareil de réseau, du niveau de performances de l'algorithme candidat de classification identifié à un seuil de performances, et le déploiement (336) de l'algorithme candidat de classification identifié comportant le déploiement de l'algorithme candidat de classification identifié après qu'il a été déterminé que le niveau de performances de l'algorithme candidat de classification identifié est supérieur au seuil de performances.

12. Procédé selon la revendication 8, comportant en outre la réalisation (402), par l'appareil de réseau, d'une opération de création de profil hors ligne, et la réalisation de l'opération de création de profil hors ligne comportant :
le recueil d'une pluralité de paramètres d'entrée ;
l'identification (408) d'une pluralité d'algorithmes candidats de classification parmi la pluralité de types d'algorithmes de classification pour effectuer une opération de classification de flux ; et
l'application (414), pour chaque algorithme de la pluralité d'algorithmes candidats de classification, d'un ou de plusieurs scripts automatisés en utilisant la pluralité de paramètres d'entrée recueillis.

13. Procédé selon la revendication 12, la réalisation de l'opération de création de profil hors ligne comportant :
la mesure (412) du niveau de performances pour chaque algorithme de la pluralité d'algorithmes candidats de classification résultant des scripts automatisés appliqués ;
l'application (414), pour chaque algorithme de la pluralité d'algorithmes candidats de classification, d'un ou de plusieurs algorithmes d'apprentissage automatique afin d'entraîner un modèle de performances pour la pluralité d'algorithmes candidats de classification dans une pluralité de conditions de trafic de réseau ;
la construction (416) d'une structure de données apprise en fonction du modèle de performances, surveillant un niveau actuel de performances de l'algorithme candidat de classification identifié ;
la comparaison du niveau actuel de performances de l'algorithme candidat de classification identifié à un seuil de performances ; et
l'identification, en réponse à une détermination selon laquelle le niveau actuel de performances de l'algorithme candidat de classification identifié est inférieur au seuil de performances, d'un algorithme de classification de substitution dont il est prédit qu'il dépasse le seuil de performances d'après la structure de données apprise.

14. Un ou plusieurs supports (100, 200) de stockage lisibles par machine comportant une pluralité d'instructions stockées sur ceux-ci qui, lorsqu'elles sont exécutées, amènent un appareil de réseau à réaliser le procédé selon l'une quelconque des revendications 8 à 13.

15. Appareil (106, 200) de réseau servant à classifier des flux de réseau à l'aide d'un routage virtuel adaptatif, l'appareil de réseau comportant des moyens destinés à réaliser le procédé selon l'une quelconque des revendications 8 à 13.
